Europäisches Patentamt

European Patent Office

Office européen des brevets

(11) Publication number: **0 479 411 A2**

## EUROPEAN PATENT APPLICATION

(21) Application number: **91304407.9**

(22) Date of filing: **16.05.91**

(51) Int. Cl.5: **C04B 33/16**, C04B 33/34

(30) Priority: **02.10.90 US 591973**

(43) Date of publication of application:
**08.04.92 Bulletin 92/15**

(84) Designated Contracting States:
**AT DE DK ES FR GB IT NL**

(71) Applicant: **Yahata, Yasuhiro**
**2-9-34, Nishi-Tokorozawa**
**Tokorozawa-shi, Saitama Pref.(JP)**

(72) Inventor: **Yahata, Yasuhiro**
**2-9-34, Nishi-Tokorozawa**
**Tokorozawa-shi, Saitama Pref.(JP)**

(74) Representative: **Hillier, Peter et al**
**Reginald W. Barker & Co., 13, Charterhouse**
**Square**
**London, EC1M 6BA(GB)**

(54) **Block molded of coal ash for civil engineering and construction works.**

(57) Blocks molded of coal ash to be effectively utilized for civil engineering and construction works. To produce the blocks of the foregoing type, a large quantity of coal ash recovered from coal combustion installations, e.g., power station and others is used. Each block has various properties such as water permeability, water impermeability, sound shielding (sound absorption or sound arresting) or the like depending on the field of application where the blocks are practically used. The blocks are produced by way of steps of mixing coal ash of 40 to 80 % by weight with a composite material of 20 to 40 % by weight comprising scherben, feldspar, bentonite and dolomite, molding the resultant mixture to a predetermined configuration corresponding to the blocks to be produced and then allowing the resultant molded product to be subjected to burning. The final products of blocks have excellent properties substantially equivalent to those of blocks molded of cement and tiles molded of a high quality of clay. Particularly, to assure that the blocks have specific properties of water impermeability and sound shielding, coal ash is preformed in the shape of a large number of grains to be used as raw material. After completion of the molding operation, the molded product is coated with a glazing material.

FIG.I

## BACKGROUND OF THE INVENTION

### FIELD OF THE INVENTION

The present invention relates generally to blocks molded of coal ash to be utilized in the field of civil engineering and construction works. More particularly, the present invention relates to solid blocks employable as pavement stones and hollow blocks preferably employable for interior and exterior lining materials for a building or a house wherein the solid blocks and the hollow blocks are molded of coal ash recovered from coal combustion installations such as power station and others.

### DESCRIPTION OF THE RELATED ART

Most of conventional blocks utilized as pavement blocks or pavement stones have been heretofore produced by using concrete composed of cement, sand and gravel as essential constituents. In addition, most of conventional tiles and bricks used as interior and exterior lining materials or wall materials have been heretofore produced by using a high quality of clay as raw material. Consequently, the conventional blocks and the conventional tiles and bricks are unavoidably produced at an expensive cost. In view of the aforementioned facts, the inventor has conducted a variety of research and development works for effectively utilizing coal ash for the purpose of cost reduction so as to allow blocks molded of coal ash to be used in place of the conventional expensive blocks. As a result derived from the research and development works, the inventor has invented the present invention.

As is well known, a large quantity of coal ash (fly ash) is discharged from coal combustion installations such as power station and others. To effectively utilize coal ash, a number of research and development works have been conducted to produce additive, inclusion, artificial gravel employable in a cement industry, road foundation material or road bed material employable in civil engineering and construction works. One of typical development works which have been accomplished is to mix coal ash with cement or asphalt to produce useful materials for civil engineering and construction works.

It has been reported that a quantity of coal ash discharged from all coal-firing power stations in this country amounts to 3,500,000 to 4,000,000 tons per year. It is estimated based on results derived from annual statistics in 1988 in Japan that a total quantity of coal ash inclusive of coal ash discharged from other industrial coal combustion installations amounts to about 7,000,000 tons per year. Further, it has been found as results derived from chemical analyses that coal ash is generally composed of the following constituents as shown in Table I, although values representative of a quantity of each constituent fluctuate to some extent from mining site to mining site.

Table I

| Chemical Composition of Coal Ash | | |
| --- | --- | --- |
| | domestic coal | imported coal |
| $SiO_2$ (%) | 50 to 55 | 25 to 40 |
| $Al_2O_3$ (%) | 25 to 30 | 15 to 30 |
| $Fe_2O_3$ (%) | 4 to 7 | 2 to 20 |
| CaO (%) | 4 to 7 | 2 to 20 |
| MgO (%) | 1 to 2 | 1 to 3 |
| $K_2O$ (%) | 0 to 1 | 1 to 4 |
| $Na_2O$ (%) | 1 to 2 | 1 to 2 |

As is apparent from Table 1, the coal ash is composed of $SiO_2$ and $Al_2O_3$ as essential constituents and has an average grain size within the range of 0.02 to 0.03 mm. The coal ash has material properties of self-hardening and produces water insoluble salts and then hardens by itself because of a pozzolan reaction when it is added with a suitable quantity of moisture and then compacted under a certain intensity of pressure. In view of the aforementioned material properties, the coal ash has been heretofore utilized as cement additive, earth improving agent, earth stabilizer, road foundation material or road bed material.

The coal ash utilizing technique has been heretofore developed based merely on the self-hardening properties as mentioned above but it has been found that the coal ash utilization technique has a comparatively low practicable value.

In recent years, to improve the practicable value of the coal ash utilizing technique, a variety of developing works have been conducted such that coal ash is mixed with carbon fiber and cement and the resultant mixture is sintered to produce artificial sintered gravel (that is called artificial coal ash sand) (refer to an official gazette of Japanese Laid-Open Patent NO. 151052/1986).

## SUMMARY OF THE INVENTION

The present invention has been made with the foregoing background in mind. In practice, the present invention has been made based on the specific material properties of coal ash, i.e., inclusion of a large quantity of $SiO_2$ and $Al_2O_3$ equivalent to that of clay-based raw material, high hardness attributable to silica-based minerals, low specific weight, light weight and very inexpensive material cost.

Therefore, an object of the present invention is to provide solid blocks, mainly pavement blocks or pavement stones employable for civil engineering and construction works as well as hollow blocks serving as interior and exterior lining materials or wall lining materials for a building or a house wherein the solid blocks and the hollow blocks are molded of coal ash recovered from coal combustion installations, respectively.

Another object of the present invention is to provide a new type of block products in the form of pavement blocks having excellent properties of water permeability to be utilized as pavement stones as well as hollow blocks having excellent water impermeable properties to be utilized as interior and exterior lining materials or wall lining materials for a building or a house wherein the solid pavement blocks and the hollow blocks are molded of coal ash recovered from coal combustion installations, respectively.

To accomplish the above objects, there is provided according to one aspect of the present invention a block molded of coal ash to be effectively utilized for civil engineering and construction works, wherein the block is produced by way of steps comprising mixing the coal ash of 40 to 80 % by weight with a composite material composed of scherben, feldspar, bentonite and dolomite, molding the resultant mixture to a predetermined configuration corresponding to a block to be produced by employing a dry type press molding process, and allowing the resultant molded product to be subjected to burning at a temperature ranging from 1230 to 1300 °C.

According to another aspect of the present invention, there is provided a block molded of coal ash to be effectively utilized for civil engineering and construction works, the wherein the block is produced by way of steps of preforming the coal ash in the shape of a large number of grains, mixing the grains of coal ash of 40 to 80 % by weight with a composite material of 20 to 40 % by weight composed of scherben, feldspar, bentonite and dolomite, molding the resultant mixture to a predetermined configuration corresponding to a block to be produced by employing the dry type press molding process and allowing the resultant molded product to be subjected to burning at a temperature ranging from 1230 to 1300 °C. Consequently, a number of blocks preferably employable for civil engineering and construction works are produced to be put in practical use in place of the conventional blocks molded of cement and the conventional tiles molded of high quality of clay.

It has been found that, according to the first-mentioned aspect of the present invention, a number of blocks having more excellent properties in respect of water impermeability, strength and easiness of a work to be conducted more than the conventional blocks molded of cement can be produced.

Further, it has been found that, according to the last-mentioned aspect of the present invention wherein a large number of grains composed of coal ash are used as raw material, a substrate of the resultant block has a very porous structure and therefore the final product of block exhibits excellent properties of water permeability, resulting in the block being advantageously employed as a water permeable pavement stone.

When the porous block is used as a wall lining material for a building or a house, it exhibits excellent properties of sound absorption or sound arresting attributable to its own porous structure. As a result, the porous block can preferably be employed as a wall lining material for a sound arresting wall or a sound absorptive wall.

Blocks of the present invention can be molded to a various configuration as desired by employing the dry type press molding process depending on the field of application where the blocks are practically used. In a case where the blocks are used as pavement stones, they are molded to a plate-shaped configuration. On the other hand, in a case where the blocks are used as exterior lining materials or wall materials, especially as lining materials for a sound arresting wall or a sound shielding wall, the blocks are molded in the form of a hollow block, respectively.

In addition, in a case where the blocks are used as interior and exterior lining materials for a building or a house, after the mixture is molded to a predetermined configuration by employing the dry type press molding process, the resultant molded product is biscuitted at a temperature ranging from 1230 to 1300 °C, the surface of the biscuitted product is coated with a glazing material and the coated product is then subjected to burning at a temperature ranging from 900 to 1200 °C in order to provide excellent functional properties as a decorative plate. As a result, the final product can advantageously be utilized as a decorative plate of chinaware as well as an exterior lining material having an excellent appearance.

As will be apparent from the above description, the present invention has provided blocks each having various excellent properties advantageously employable for civil engineering and construction works by effectively utilizing coal ash recovered from coal combustion installations such as power plant and others.

Other objects, features and advantages of the present invention will be apparent from reading of the following description which has been made in conjunction with the following drawings.

**BRIEF DESCRIPTION OF THE DRAWINGS**

The present invention is illustrated in the following drawings in which:

Fig. 1 is a flowchart which illustrates a series of steps of producing a number of plate-shaped solid pavement blocks by using coal ash recovered from coal combustion installations in accordance with an embodiment of the present invention;

Fig. 2 is a side view of the pavement block molded by way of the steps as shown in Fig. 1 wherein the pavement block is partially exploded;

Fig. 3 is a flowchart which illustrates a series of steps of producing a number of porous blocks by using coal ash recovered from coal combustion installations wherein the coal ash is preformed in the shape of a large number of grains which in turn are molded to a predetermined configuration corresponding to each block to be produced, and

Fig. 4 is a perspective view which illustrates by way of example a hollow block employable for a wall lining material for a building or a house.

**DESCRIPTION OF THE PREFERRED EMBODIMENTS**

Now, the present invention will be described in detail hereinafter with reference to the accompanying drawings which illustrate preferred embodiments of the present invention.

First, description will be made below as to a first embodiment of the present invention wherein a number of water impermeable pavement blocks or pavement stones are produced.

A composition (represented by percentages by weight) of the raw material used for producing the pavement blocks or pavement stones is as noted below.

| coal ash | 40 (%) |
|----------|--------|
| scherben | 20 |
| feldspar | 32 |
| bentonite | 5 |
| dolomite | 2 |

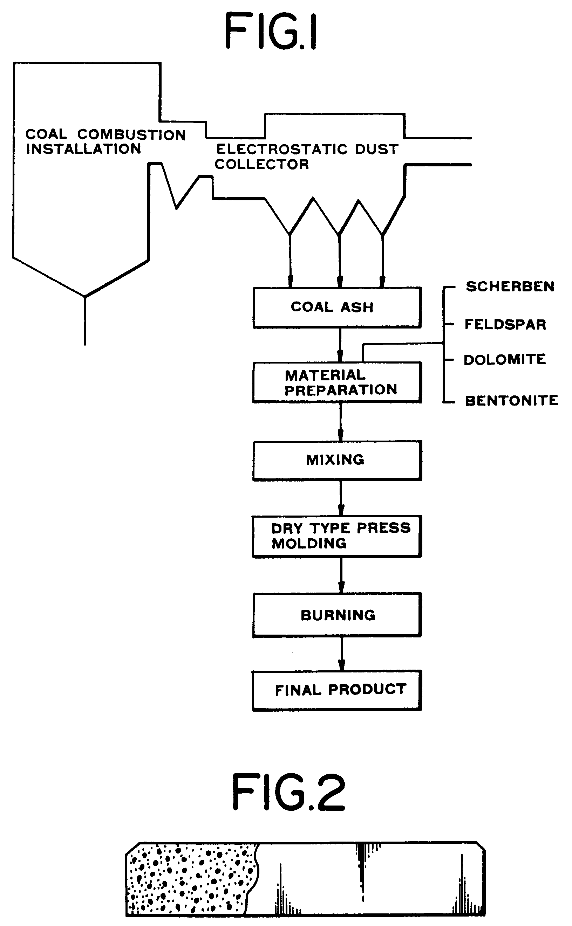

As shown in the flowchart in Fig. 1, the aforementioned materials are mixed together by operating a mixer and the resultant mixture is molded to a plate-shaped block in accordance with a dry type press molding process. Specifically, the molding operation is performed by way of steps of filling a vibration type molding frame with the mixture prepared in the mixer and molding the resultant mixture to a predetermined configuration corresponding to a block to be produced under a high intensity of pressure.

Subsequently, the molded product is subjected to burning at a temperature of 1300 °C to produce a plate-shaped pavement block. Fig. 2 is a sectional side view of the pavement block which is partially exploded.

Table - II

| Table comparing properties of pavement block with those of other products | | | |
|---|---|---|---|
| | water absorption rate | bending strength | compression strength |
| pavement block of the present invention | 1.0 % | 101 kgf/cm$^2$ | 1100 kgf/cm$^2$ |
| pavement block of concrete | - | 50 or more kgf/cm$^2$ | 330 or more kgf/cm$^2$ |
| brick | 10 or less % | - | 300 or more kgf/cm$^2$ |

As is apparent from Table II, the pavement block molded of coal ash in accordance with the present invention is remarkably superior to commerically available pavement blocks molded of cement in respect of a bending strength and a compression strength both of which constitute important structural conditions as a pavement stone. Since the pavement block of the present invention is produced such that raw material employable for chinaware such as scherben, feldspar or the like material is added to coal ash composed of fine particles and the mixture is burnt after completion of a molding operation performed under a high intensity of pressure, it has excellent properties in respect of a resistance against slidable movement of the pavement block. It has been found that the pavement block of the present invention exhibits excellent functional properties as a water impermeable pavement stone. In addition, since the pavement block of the present invention is produced to an useful product by utilizing coal ash derived from industrial waste as a raw material, it has a highly advantageous effect that it can be produced at a low cost.

Particularly, in addition to cost reduction derived from reuse of the waste material, since the pavement block of the present invention is produced by employing a dry type press molding process as block molding means that is a main step among a plurality of steps for production but it is not produced by employing the conventional extruding process or wet type press molding process, it becomes possible to automatically produce a number of blocks of the present invention at a high speed with a highly increased yielding rate.

Next, description will be made below as to a second embodiment of the present invention wherein a number of water permeable pavement blocks are produced.

In this embodiment, coal ash is preformed in the shape of a large number of grains prior to a molding operation for the water permeable pavement blocks. To preform the coal ash in the shape of a large number of grains in that way, the coal ash of 100 parts by weight is added with water of 20 % by weight and high molecular binder of 0.1 % by weight and the resultant mixture is well mixed in a conventional mixer. On completion of the mixing operation, the well-mixed material is introduced into a pan type glanulator in which a large number of grains each having a grain size ranging from 0.5 to 1.0 mm are prepared.

The resultant granular material is mixed with a composite material comprising scherben, feldspar, dolomite and bentonite in the same manner as the first embodiment of the present invention. On completion of the mixing operation, the mixture is molded to a predetermined configuration corresponding to a block to be produced by employing the dry type press molding process. Subsequently, the molded product is subjected to burning to produce a desired water permeable pavement block. Particularly, to assure that the substrate of the pavement block has excellent properties of water permeability, care should be taken to properly regulate an intensity of molding force during the dry type press molding step so as to allow a large number of grains each composed of coal ash to be connected to each other without undesirable deformation of their shape.

A mixing ratio of the coal ash preformed to a large number of grains to the composite material comprising scherben and others is as noted below. It should be added that a composition of the materials employed for producing a number of water permeable pavement blocks is presented by % by weight.

| | |
|---|---|
| coal ash | 80 (%) |
| scherben | 10 |
| feldspar | 3 |
| bentonite | 5 |
| dolomite | 2 |

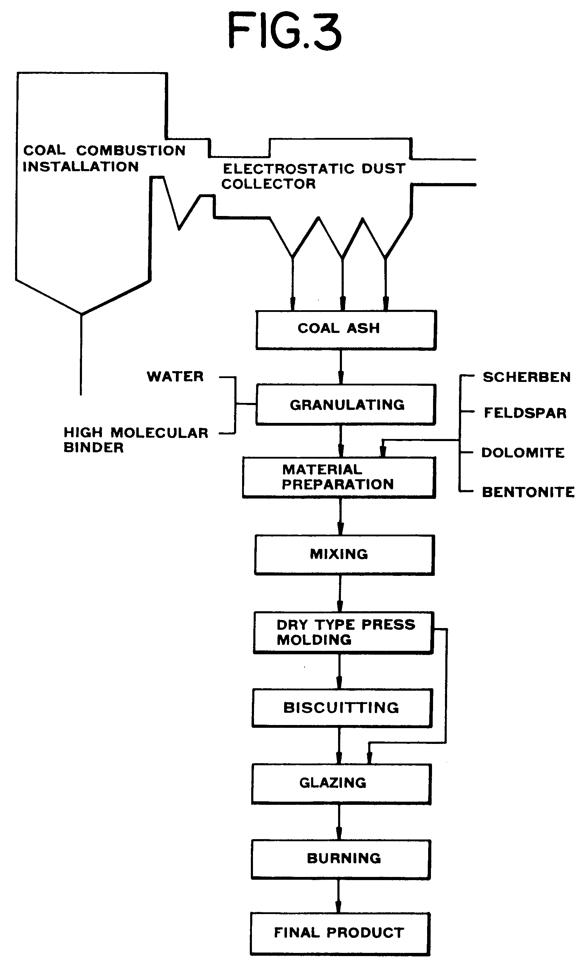

Fig. 3 is a flowchart which shows a series of steps of producing a number of water permeable pavement blocks. As is apparent from the flowchart, a step of biscuitting (to be performed at a temperature ranging from 1230 to 1300 °C) and a step of glazing are arranged after the step of dry type press molding. Arrangement of the both steps of biscuitting and glazing is intended to glaze the molded product in order to raise the commercial value of a final product. Therefore, the flowchart shows a case where a number of coated blocks are produced in accordance with the present invention.

Therefore, in a case where a number of water impermeable blocks or water permeable blocks are produced without any coating, the step of biscuitting and the step of glazing are not required. After completion of the dry type press molding step, a molded product is transferred to a step of burning to be performed at a temperature ranging from 1230 to 1300 °C.

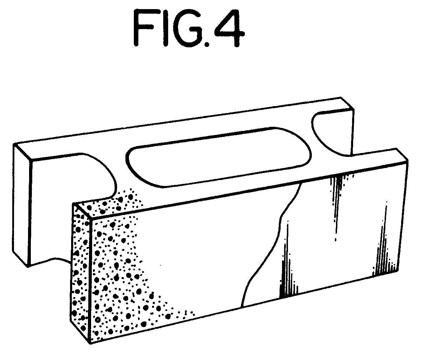

Fig. 4 is a perspective view which illustrates by way of example a molded product in the form of a hollow block which is used for the purpose of utilization as a wall material for a building.

When coal ash is preformed in the shape of a large number of grains which in turn are adjustably mixed with a composite material comprising scherben and others as described above, before a molded product is molded in the form of a hollow block by employing the dry type press molding process, the substrate of the molded product has a porous structure. As a result, a final product of hollow block exhibits excellent properties in respect of sound absorption and sound arresting.

As is apparent from the flowchart in Fig. 3, the step of biscuitting is performed at a temperature ranging from 1230 to 1300 °C after completion of the dry type press molding step and thereafter the surface of the molded product is coated with a glazing material. Consequently, a final product of hollow block can be used as a so-called exterior lining material substantially equivalent to a tile or the like product which is usually produced using a high quality of clay.

As will be readily apparent from the above description, molded blocks produced in accordance with the present invention have the following advantageous effects compared with the conventional pavement blocks produced using a high quality of cement and the conventional tiles produced using a high quality of clay as interior and exterior lining material or wall material.

(1) Since coal ash which has been heretofore disposed as industrial waste material is used as raw material, this leads to effective utilization of resource. Particularly, a quantity of consumption of new clay or the like raw material is minimized. As a result, in addition to the effective utilization of resource, a product cost can be reduced substantially.

(2) As is well known, the coal ash is composed of a number of small particles each having a very dense structure and has a low specific weight. The coal ash is mixed with a composite material comprising scherben, feldspar serving as chinaware material, dolomite serving as heat resistant material and bentonite serving as plasticizing additive. Thus, In spite of the fact that the final products of blocks are very light in weight, they have excellent properties of bending strength and compression strength. Therefore, the blocks of the present invention are preferably employable as pavement blocks or pavement stones for civil engineering and construction works.

Particularly, in a case where the block products are utilized as pavement blocks or pavement stones, they exhibit not only adequate properties of resistance against slidable movement of each pavement block but also excellent properties of wear resistance and durability.

(3) In a case where the coal ash is preformed in the shape of a large number of grains which in turn are mixed with a composite material, the resultant mixture is molded to a predetermined configuration corresponding to a block to be produced and the molded product is then subjected to burning to provide a final product, the final product exhibits not only excellent properties of water permeability but also an excellent function of sound absorption or sound arresting. Therefore, when the final products are used as pavement blocks, they can provide a high quantity of pavement having excellent properties of water drainage. In addition, when they are used as wall materials for a building or a house, they serve as structural members preferably employable for a conference room or a living room having excellent properties of sound shielding.

(4) It has been found that the product block of which surface is coated with a glazing material has an excellent quality substantially equivalent to a tile molded of a high quality of clay in respect of contact feeling and appearance in spite of the fact the substrate of the block is composed of coal ash as a main constituent. Consequently, the final products can advantageously be utilized as lining materials for a building.

As described above, the blocks molded of coal ash in accordance with the present invention to be utilized for civil engineering and construction works have remarkable superiority not only in respect of available functions as commercial products, i.e., properties of water permeability and sound shielding but also in respect of inexpensiveness derived from easy handling attributable to light weight and simplification of molding means in construction, i.e., simplification of the dry type press molding process, compared with the conventional block products molded of concrete and the conventional tile products molded of a high quantity of clay.

Particularly, advantageous merits derived from the effective utilization of the coal ash which has been heretofore disposed as waste material should highly be evaluated in addition to the aforementioned excellent available functions.

While the present invention has been described above with respect to two preferred embodiments thereof, it should of course be understood that the present invention should not be limited only to these embodiments but various changes or modification may be made without departure from the scope of the invention as defined by the appended claims.

## Claims

1. A block molded of coal ash to be effectively utilized for civil engineering and construction works, wherein said block is produced by way of steps comprising;

   mixing said coal ash of 40 to 80 % by weight with a composite material of 20 to 60 % by weight comprising scherben, feldspar, bentonite and dolomite,

   molding the resultant mixture to a predetermined configuration corresponding to said block to be produced by employing a dry type press molding process, and

   allowing the resultant molded product to be subjected to burning at a temperature ranging from 1230 to 1300 °C.

2. A block molded of coal ash to be effectively utilized for civil engineering and construction works, wherein said block is produced by way of steps comprising,

   preforming said coal ash in the shape of a large number of grains,

   mixing said grains of coal ash of 40 to 80 % by weight with a composite material of 20 to 40 % by weight comprising of scherben, feldspar, bentonite and dolomite,

   molding the resultant mixture to a configuration corresponding to said block to be produced by employing a dry type press molding process, and

   allowing the resultant molded product to be subjected to burning at a temperature ranging from 1230 to 1300 °C.

3. The block as claimed in any one of claims 1 and 2, wherein said molded product which has been molded in accordance with said dry type press molding process comprises a hollow block.

4. The block as claimed in claim 2, wherein said molded product which has been molded in accordance with said dry type press molding process is previously sintered at a temperature ranging from 1230 to 1300 °C, the surface of the sintered block is coated with a glazing material and a burning operation is then performed at a temperature ranging from 900 to 1200 °C for the sintered block of which surface has been coated with said glazing material.

# FIG.I

COAL COMBUSTION
INSTALLATION

ELECTROSTATIC DUST
COLLECTOR

| COAL ASH |

— SCHERBEN

— FELDSPAR

— DOLOMITE

— BENTONITE

| MATERIAL
PREPARATION |

| MIXING |

| DRY TYPE PRESS
MOLDING |

| BURNING |

| FINAL PRODUCT |

# FIG.2

# FIG.3

COAL COMBUSTION INSTALLATION

ELECTROSTATIC DUST COLLECTOR

COAL ASH

WATER

HIGH MOLECULAR BINDER

GRANULATING

SCHERBEN

FELDSPAR

DOLOMITE

BENTONITE

MATERIAL PREPARATION

MIXING

DRY TYPE PRESS MOLDING

BISCUITTING

GLAZING

BURNING

FINAL PRODUCT

# FIG.4